# EUROPEAN PATENT SPECIFICATION

(11) **EP 3 558 678 B1**
(45) Date of publication and mention of the grant of the patent: **03.03.2021**
(21) Application number: 17822634.6
(22) Date of filing: 15.12.2017
(51) Int. Cl.: B29C 64/124, B29C 64/245, B29C 64/336, B33Y 80/00

(54) **STEREOLITHOGRAPHIC METHOD OF MAKING A FLEXO-PLATE**
STEREOLITHOGRAPHISCHES VERFAHREN ZUR ERSTELLUNG EINER FLEXOGRAPHISCHEN DRUCKVORLAGE
PROCÉDÉ STÉRÉOLITHOGRAPHIQUE DE CRÉATION D'UN MODÈLE D'IMPRESSION FLEXOGRAPHIQUE

(30) Priority: 20.12.2016 EP 16205256; 20.12.2016 EP 16205233
(43) Date of publication of application: 30.10.2019
(73) Proprietor: AGFA NV, 2640 Mortsel (BE)
(72) Inventor: BILLIET, Thomas, 2640 Mortsel (BE)
(74) Representative: Strijckers, Hans Louis P.
(86) International application number: PCT/EP2017/082998
(87) International publication number: WO 2018/114655

(56) References cited:
- EP-A1- 0 523 945
- EP-A1- 3 018 531
- WO-A1-2016/133759
- WO-A1-2016/184997
- US-A1- 2009 184 444
- US-A1- 2015 309 473
- US-B1- 6 214 276

## Description

### Technical Field

The current invention belongs to the field of making a flexographic print master, also called a flexo-plate.

### Background Art

In flexographic printing a flexible cylindrical relief print master is used for transferring a fast drying ink from an anilox roller to a printable substrate. The print master can be a flexible plate that is mounted on a cylinder or it can be a cylindrical sleeve.

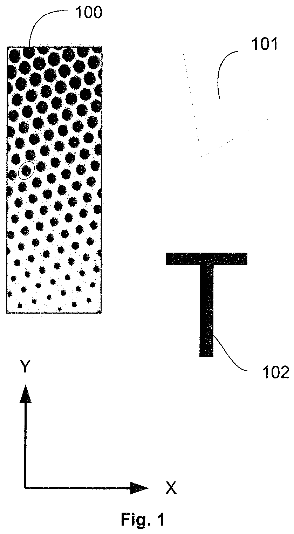

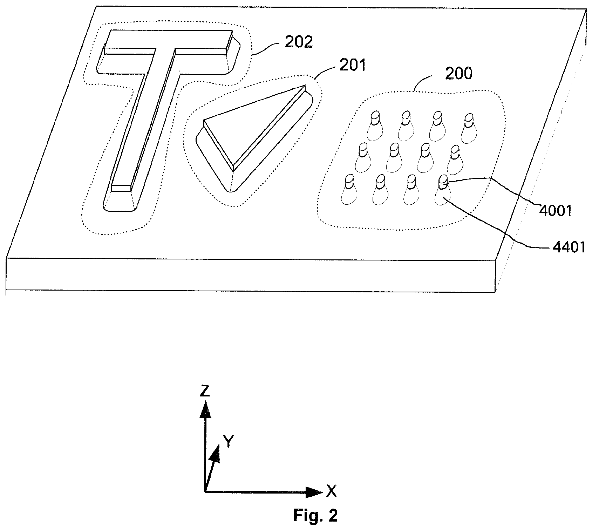

The raised portions (200, 201, 202) of the relief print master in FIG. 2 define the image features (100, 101, 102) in FIG. 1 that are to be printed.

Because the flexographic print master has elastic properties, the process is particularly suitable for printing on a wide range of printable substrates including, for example, corrugated fiberboard, plastic films or bags or even metal sheets.

A traditional method for creating a print master uses a photosensitive polymerizable sheet that is exposed by a UV radiation source through a negative film or a negative laser ablated mask layer that defines the image features. Under the influence of the UV radiation, the sheet will polymerize underneath the transparent portions of the film. The remaining portions are washed away and what remains is a positive relief print master. An example of such a system and method is disclosed in the patent EP1170121 B assigned to Agfa-Gevaert NV and having a priority date of 2002-06-26.

The above method suffers from a number of drawbacks. It requires an extensive series of processing steps such as preparing the mask layer (which by itself includes a number of steps), exposing the polymerizable sheet and washing away the non-polymerized elements. Moreover, it offers little control over the final result and more specifically over the slope of the image features that are formed onto the print master. The slope of a small image feature (such as a small halftone dot or a narrow character stem) is preferably not too steep because this would cause the image feature to buckle during printing, resulting in the loss of rendering of small" positive" image detail. On the other hand the slope should not be too shallow as this would cause the space between two closely neighbouring image features (300) to fill up, resulting in the loss of rendering of small" negative" image detail.

A three-dimensional printing technique for forming a flexographic print master is disclosed in the patent EP 1428666 B assigned to Agfa Graphics NV and having a priority date of 2002-12-11. According to this method, an inkjet printing system is used for jetting on a substrate at least two image-wise layers of a polymerizable fluid. After a first layer has been jetted, it is immobilized ("partially cured") before the subsequent layer is applied. The immobilization is achieved by means of UV-light. Because according to this method the flexographic printing master is build up layer by layer, it is at least theoretically possible to control the slope of the image features in a different way for positive or for negative image features using image processing techniques. Small positive features could receive a soft slope, whereas small negative features on the contrary could receive a steep slope. One of the problems with the above method, however, is that it is difficult to control the exact shape and thickness of the layers that are formed by jetting UV-curable ink droplets with a printhead. This is related to a variety of factors such as surface tension effects and the spherical (as opposed to "cubic") shape of the droplets when they land onto the printable surface. These effects tend to accumulate layer by layer and can result in unintentional unevenness of the top layer of the image features. This causes uneven pressure between the print master and the printable substrate on the rotary press, resulting in uneven transfer of the ink and serious degradation of the quality of the printed image such as banding and streaking.

The patent US 9216566 B2 assigned to Agfa Graphics NV and having a priority date of 2008-12-19 discloses an additive method for creating a flexographic print master. It operates in two steps. In a first step a plurality of mesa relief layers (4401) are deposited on a base with an inkjet apparatus and at least partially cured. In a second step a plurality of image relief layers (4001) are deposited on top of the plurality of mesa relief layers (4401) with an inkjet apparatus and at least partially cured. The ink composition that is used for the mesa relief layers (4401) and image relief layers (4001) and their thickness are different. The mesa relief layers (4401) and image relief layers (4001) may be printed by different printheads of which the nozzle diameter and pitch may differ. Like all additive three-dimensional print processes that use inkjet to create a flexographic print master, also this system suffers from the problem that it is difficult to achieve that the image features in the top image layer are in a single plane.

The US patent US 7800638 B2 (Dainippon Screen Mfg. Co) discloses a laser engraving system for making a printing plate that uses two separate laser engraving beams having a different diameter and pixel pitch. The laser beam having the larger diameter and pixel pitch records the material with a greater depth than the laser beam having the smaller diameter and pixel pitch. The presented solution combines the performance of a low resolution engraving system with the precision of a high resolution engraving system.

The patent US 7827912 B (Eastman Kodak) discloses an optical imaging head for direct engraving of a flexographic printing plate. The head comprises two groups of radiation sources. The intensity and the spot size of both groups are different. The two groups of radiation sources operate simultaneously, whereby the group that uses a broad spot is used to engrave large solid areas, and whereby the group that uses a fine spot process areas that require fine detail.

The US patent application US2011/0126760 (Agfa Graphics NV) teaches a method and a system for making a flexographic print master. In a first step a layer of radiation curable liquid is image-wise applied on a substrate by means of an inkjet apparatus operating at a first resolution. In a second step this layer is cured by a radiation source. In a third step fine detail is engraved in the cured layer using a laser engraving technique that operates at a second resolution that is higher than the first resolution. This invention only partially solves the problem that in a prior art laser engraving technique, a significant amount of cured mass needs to ablated, which results in significant amount of debris and fine dust that needs to be evacuated, but of which inevitably a portion lands on and sticks to the surface of the flexographic print master Further stereolithographic methods and apparatuses are known from EP3018531 and US6214276.

### Disclosure of Invention

In view of the deficiencies of the prior art systems and methods to create a flexographic print master, a new and inventive system is needed that combines the following features:
- The new system and method should be efficient and fast, and reduce the manufacturing time of flexographic print master;
- The new system should be capable of defining the relief features of the image elements, which are formed in the image relief layer (4001) from the flexo-plate, with a high precision;
- The new system should have a minimal number of parts that require high precision mechanical manufacturing;
- The new system should make a flexographic print master in an work environment with a minimum of dust and debris because they contaminate the flexographic print master which result in a bad print quality when used in a flexo press.

Dust easily contaminates between the image relief layer (4001) and the mesa relief layer (4401) from a flexo-plate.

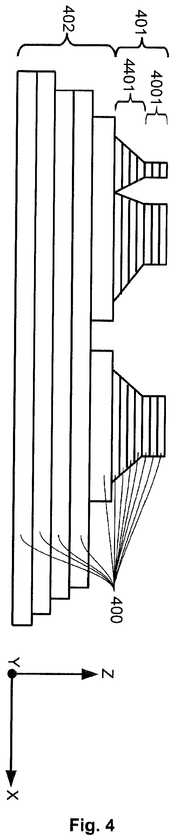

Preferably, the system should be capable to optimize the mechanical characteristics of the different layers, such as elastomeric floor, mesa relief layer (4401) and image relief layer (4001), which make up a flexographic print master. These different named layers on a flexo-plate are well known in the flexo-industry and are stacked on top of each other to form the flexo-plate. In the present invention the elastomeric floor, mesa relief layer (4401) and/or image relief layer (4001) comprising a set of stacked exposed layers of a curable liquid. (FIG. 4)

The above objects are realized with a flexo-platemaker that has the following features:
A flexo-platemaker, also called a flexographic plate maker comprising:
- a vat (301) having a transparent bottom (302);
- a valve (342, 352) for filling the vat (301) with a curable liquid (341, 351) from a tank (340,350), said curable liquid (341, 351) having after curing a set of physical characteristics;
- a manufacturing platform (300);
- an illumination system (320, 330, 331, 332, 333) underneath the transparent bottom (302) of the vat (301) for exposing a layer (313) of the curable liquid (341, 351) between the transparent bottom (302) and the manufacturing platform (300) in order to cure said layer (313). The illumination system may comprise a scanning light beam or may comprise a matrix of addressable pixels (321). Preferably these addressable pixels (321) are controllable to become transparent, as explained further.

A flexo-platemaker is a system for manufacturing a flexographic print master. The flexo-platemaker may additional comprises a valve (362) for purging the curable liquid (341, 351) in the vat (301) to either a waste tank (360) or to the tank (340, 350) for example for recycling. Preferred embodiments of the present invention are the use of the above present flexo-platemaker and its preferred embodiments further disclosed:
- for manufacturing a flexographic printing plate; or
- for exposing a elastomeric floor of a flexographic printing plate; or
- for exposing a mesa relief layer (4401) on a elastomeric floor from a flexo-plate; or
- for exposing an image relief layer (4001) on a mesa relief layer (4401) or on a elastomeric floor from a flexo-plate.

The present invention comprises flexo-plate manufacturing method according to claim 1 and the use of the flexo-plate, manufactured by the present manufacturing method of flexo plates 2. according to claim 5. The flexo-plate is preferably used in a flexographic printing press for printing on flexible packaging or cardboard. The flexo-plate comprises an elastomeric floor and image relief layer, and optionally a mesa relief layer. These layers may be exposed by different illumination (sub)systems and/or may be cured layers from different curable liquids.

In the present disclosure the valve, preferably an other valve, comprised in this flexo-platemaker is for filling the vat (301) with an other curable liquid (351) from an other tank (350), said other curable liquid after curing having an other set of physical characteristics. Preferably is the set of physical characteristics and the other set of physical characteristics different. For example the hardness is preferably lower for the cured curable liquid than the cured other curable liquid and/or the elasticity is preferably higher for the cured curable liquid than the cured other curable liquid. Hardness may be measured as disclosed in the standard ASTM D2240 or measured for example by BIRKAN™ Shore Hardness Tester. Elasticity testing may be performed with tools from Ametek™ (http://www.ametektest.com/learningzone/testtypes/modulus-of-elasticity-testing). The cured curable liquid is the curable liquid after curing; and the cured other curable liquid is the other curable liquid after curing.

The flexo-platemaker may additional comprises a valve (362) for purging the other curable liquid (351) in the vat (301) to either an other waste tank or the waste tank (360) or to the other tank (350) for example for recycling.

In the present disclosure preferably the flexo-platemaker comprises another illumination system (330, 331, 332, 333), which comprises a scanning light beam for exposing a layer (313) and/or another layer of the curable liquid (303) and/or a layer of the other curable liquid (351), from the previous preferred embodiment, between said transparent bottom (302) and the manufacturing platform (300) in order to cure said layer (313). More preferably the illumination system, further called the first illumination system, comprises a matrix of addressable pixels (321). These addressable pixels (321) are configured for exposing a layer (313) of the curable liquid (313). Preferably these addressable pixels (321) are controllable to become transparent, as explained further.

The other illumination (sub)system (330, 331, 332, 333) is further called the second illumination (sub)system.

The advantage of using more than one illumination (sub)system is that different kind of polymerization is possible to have different kind of elasticity and/or hardness in the different layers such as elastomeric floor, mesa relief layer and image relief layer. The use of a plurality of curable liquids has the same reason namely to make it possible to have different kind of elasticity and/or hardness in the different layers such as elastomeric floor, mesa relief layer and image relief layer. Depending on the application such as printing on flexible packaging or printing on cardboard, ask for different type of elasticity and hardness due to the hardness of the material where on is printed or the different type of ink, such as UV ink or solvent ink, which may wear the flexo-plate. The present invention makes it thus possible to switch from one application to another application by controlling the exposure or the manner of changing the thickness in the layers...

Preferably in the X-Y dimensions the resolutions of the second illumination are higher than the illumination system with the matrix of addressable pixels (321). Hereby two preferred embodiment of this whereby the flexo-platemaker additional comprise:
(A)
   - a first cured layer of the curable liquid (341) between the transparent bottom (302) and the manufacturing platform (300) exposed by the illumination system (320);- second cured layer of the curable liquid (341) between the transparent bottom (302) and the manufacturing platform (300) exposed by the illumination system (320);- a third cured layer of the other curable liquid (351) between the transparent bottom (302) and the manufacturing platform (300) exposed by the second illumination system (330, 331, 332, 333). The third cured layer may additionally be exposed by the first illumination.
(B)
   - a first cured layer of the curable liquid (341) between the transparent bottom (302) and the manufacturing platform (300) exposed by the illumination system (320);- a second cured layer of the other curable liquid (351) between the transparent bottom (302) and the manufacturing platform (300) exposed by the second illumination system (330, 331, 332, 333). The second cured layer may additionally be exposed by the first illumination.

Elasticity and/or hardness is preferably different for each layer, such as mesa relief layer, elastomeric floor and image relief layer to have a well performing flexo plate. The hardness may be determined by longer exposure of the illumination systems in the present invention for example to make the flexo plate more resistant to UV flexo inks or to have a better wear of the flexo plate. The elastomeric floor may be have a better flexibility to easily attach to a sleeve than the other layers. The present invention makes it possible to choose the different characteristics of the cured layers by applying a different curable liquid and/or apply a different illumination system. For example if the hardness value for the top layers of a flexo-plate (401) is higher than of the bottom layers (402) it is possible to avoid buckling or distortion of the small image features on top layers, which may comprise a mesa relief layer, during printing. The effect is an improved rendering of fine image detail.

In a preferred embodiment of the present invention, especially when in the X-Y dimensions the resolutions of the second illumination are higher than the illumination system with the matrix of addressable pixels (321), the layer of a curable layer exposed by the first illumination system (320) has a thickness value that is higher than the thickness value of a curable layer exposed by the second illumination system (330, 331, 332, 333).

The illumination system with the matrix of addressable pixels (321) preferably belongs or is selected from to the group of: a transparent OLED illumination system, an LCD illumination system and a digital micromirror illumination system.

Preferably such illumination system comprises a two-dimensional array of elements, as matrix of addressable pixels (321) of which the transparency can be individually switched between a first level and a second level that is lower than the first level, the ratio of the first over the second level defining a contrast ratio; where in the illumination system said contrast ratio exceeds 20/1 in the UV-A (15 µm - 400 µm) part of the electromagnetic spectrum; and whereby the pitch of an array element is 40 µm or smaller. This illumination system is further disclosed in EP3182206 (AGFA GRAPHICS).

The exposure of the pixels of an image layer in the stack (402) by the first illumination system (320) is made in parallel and at a relatively low resolution in the X, Y and Z dimensions. Nevertheless, the imaging layers (401) of the top layers of the three-dimensional model of the flexographic print master are made with great precision due to the relatively high resolution of the second illumination system (330, 331, 332, 333). An additional advantage of the invented method and system is that it enables to separately control the physical characteristics to the different layers, such as elastomeric floor, mesa relief layer (4401) and image relief layer (4001), which make up a flexographic print master. The imaging layers comprises only the image relief layer (4001) or image relief layer (4001) with the mesa relief layer (4401).

The present disclosure is also a method of manufacturing a flexographic print master, preferably by the above presented embodiments of a flexo-platemaker. The method of the present invention comprises the steps of:
- filling a vat (301) having a transparent bottom (302) with a curable liquid (341) that is stored in a tank (340) by opening a valve (342), the curable liquid having a set of physical characteristics after curing;
- moving a manufacturing platform (300) vertically over a distance to create a layer (313) of the curable liquid (341) between the manufacturing platform (300) and the transparent bottom (302) of the vat (301);
- exposing from underneath the vat (301) said layer(313) for curing said (313) by an illumination system.

The illumination system belongs to or selected from the group comprising: a transparent OLED illumination system, an LCD illumination system and a digital micromirror illumination system or an illumination system comprises a scanning light beam. Illumination system is further also described as illumination system.

The method preferably comprises the following additional steps:
- purging the curable liquid (341) in the vat (301) through a valve (362) to either a waste tank (360) or to the tank (340);
- filling the vat (301) with another curable liquid (351) that is stored in an other tank (350) by opening another valve (352), the other curable liquid having an other set of physical characteristics after curing;
- moving the manufacturing platform (300) vertically over the distance or another distance to create another layer (313) of the other curable liquid (351) between the manufacturing platform (300) and the transparent bottom (302) of the vat (301);
- exposing from underneath the vat (301) said other layer(313) for curing said other layer (313). More preferably the other set of physical characteristics after curing is different than the set of physical characteristics after curing. For example the hardness is preferably lower for the cured curable liquid than the cured other curable liquid and/or the elasticity is higher for the cured curable liquid than the cured other curable liquid. Hardness may be measured as disclosed in the standard ASTM D2240 or measured for example by BIRKAN™ Shore Hardness Tester. Elasticity testing may be performed with tools from Ametek™ (http://www.ametektest.com/learningzone/testtypes/modulus-of-elasticity-testing). The cured curable liquid is the curable liquid after curing; and the cured other curable liquid is the other curable liquid after curing. Preferably the curable liquid and/or the other curable liquid is a photo curable ink, more preferably a photo UV curable ink.

Furthermore the method may comprise an additional step:
- purging the other curable liquid (351) in the vat (301) to either an other waste tank or the waste tank (360) or to the other tank (350) for example for recycling.

The other layer may further be described as second layer; the other curable liquid may further be described as second curable liquid; the other distance may further be described as second distance; the set of physical characteristics may further be described as the first set of physical characteristics; the other set of physical characteristics may further be described as the second set of physical characteristics; the valve may be further be described as the first valve; the other valve may be further be described as the second valve.

In a preferred embodiment is the first layer, such as image relief, mesa relief, elastomeric floor exposed by a first illumination system and the second layer exposed by a second illumination system. The elastomeric floor as layer and/or mesa relief as layer, for example the first layer, is preferably exposed by a illumination system that comprises matrix of addressable pixels and wherein the illumination system belongs to or selected from the group comprising: a transparent OLED illumination system, an LCD illumination system and a digital micromirror illumination system. The mesa relief as layer and/or image relief as layer, for example the second layer, is preferably exposed by an illumination system that comprises a scanning light beam. The scanning light beam has preferably a higher exposure resolution, mostly defined in dots per inch (dpi), wherein an inch equals 2.54 cm. The resolution of the exposure of the scanning light beam is preferably between 1000 dpi and 9600 dpi. The resolution of the exposure by the matrix of addressable pixels is preferably between 200 and 4800 dpi and preferably lower than the resolution of the exposure of the scanning light beam.

The elastomeric floor preferably comprises a transparent floor which is lay down on the manufacturing platform before the exposure of the layers according the present invention. The transparent floor is after the creation of the flexo-plate easily removable from the manufacturing platform. The floor may comprises self-adhesive means to support better by adhering to the manufacturing platform wherein the self-adhesive means also may be used to support better by adhering on a sleeve in a flexographic printing press. The adhering is preferably by exercising pressure on the floor when applying on the manufacturing platform or by exercising pressure on the flexo-plate by adhering on a support, such as a sleeve, which is later applied on a flexographic printing press.

The present invention may thus comprise additional steps of - applying a floor which has a side comprising a self-adhesive for adhering to the manufacturing platform. The floor has to be transparent or semitransparent or translucent to exposing the layers in the vat through it by the illumination system or illumination sub-systems.

The self-adhesive as disclosed in the above mentioned US2003/0037687 may be used. In US2003/0037687 the self-adhesive is a crosslinked polymer, coated or sprayed on a sleeve body. The polymers that may be used are for example polymers based on carboxylated nitrile, polyisoprene, acrylate resin, silicone, polychloroprene, ethylene vinyl acetate, butyl rubber and polyurethane. Crosslinking may be achieved by exposure to UV light or by the application by heat.

US6079329 also discloses a self-adhesive, based on UV and thermal curable polymers. Examples of such polymers are disclosed on col.3, In.45-60. WO2010/090685 also discloses a self-adhesive layer applied on a print cylinder based on a UV curable composition comprising a binder, at least one monomer, a photo-initiator and microspheres.

Before the support or the DLE flexographic printing master precursor is removable attached, the surface of the self-adhesive is preferably cleaned with a suitable solvent. In US6079329 suitable solvents are ethyl acetate, alcohol, and naphtha. However, according to US607932 any solvent volatile solvent which is compatible with the material of the self-adhesive may be used.

More preferred embodiments on the illumination systems, used in this method of the present invention are disclosed above.

In a preferred embodiment the layer of a curable layer exposed by the first illumination system (320) has a thickness value that is higher than the thickness value of a curable layer exposed by the second illumination system (330, 331, 332, 333).

The present disclosure is also a method of manufacturing a flexographic print master, preferably by the above presented embodiments of a flexo-platemaker. The method of the present disclosure comprises the steps of:
- filling a vat (301) having a transparent bottom (302) with a curable liquid (341) that is stored in a tank (340) by opening a valve (342);
- moving a manufacturing platform (300) vertically over a distance to create a layer (313) of the curable liquid (341) between the manufacturing platform (300) and the transparent bottom (302) of the vat (301);
- exposing from underneath the vat (301) said layer(313) for curing said (313) by an illumination system.

The method preferably comprises the following additional steps:
- purging the curable liquid (341) in the vat (301) through a valve (362) to either a waste tank (360) or to the tank (340);
- filling the vat (301) with another curable liquid (351) that is stored in an other tank (350) by opening another valve (352), the other curable liquid having an other set of physical characteristics after curing;
- moving the manufacturing platform (300) vertically over the distance or another distance to create another layer (313) of the other curable liquid (351) between the manufacturing platform (300) and the transparent bottom (302) of the vat (301);
- exposing from underneath the vat (301) said other layer(313) for curing said other layer (313). The other curable liquid may be exposed by the illumination system or by another illumination system. The illumination system or the other illumination system belongs to or selected from the group comprising: a transparent OLED illumination system, an LCD illumination system and a digital micromirror illumination system or an illumination system comprises a scanning light beam.

If the flexo-plate comprises a mesa relief layer (4401) than the mesa relief is obtained by the method and system of the present disclosure on an elastomeric floor that provides the necessary resilience to the flexographic printing master. Such an elastomeric floor is obtained by the method and system of the present disclosure. The height of an elastomeric floor is preferably between 0.3 mm and 7 mm. The image relief layer (4001) is obtained by the method and system of the present disclosure on the elastomeric floor or on the mesa relief layer (4401). Such a mesa relief is only present in those parts of the flexographic printing master comprising image features such as text, graphics and halftone images. In extended areas where such image features are absent, there is no mesa relief.

The presence of a mesa relief in image areas is optional but preferable. A mesa relief has a height (242) in a range from 50 µm to 1 mm, for example 0.5 mm.

The mesa relief layer (4401) forms plurality of sloped segments, are preferably obtained with a slope having an angle that is less than 90 degrees. The angle can be between 25 and 75 degrees, preferably between 40 and 60 degrees, for example 50 degrees. The angle can be controlled by controlling the height of exposing multiple layers, their number and the difference in size between subsequent exposing layers.

Using a lower slope angle has the advantage that small features on the print master will suffer less from buckling. The total height of the mesa relief layer (4401) is for example between 30 µm and 700 µm, preferably between 50 µm and 250 µm.

The present invention comprises the embodiment of the use of a flexo-plate which is obtained by the present embodiments of the flexo-platemaker and obtained by the present embodiments of the method of manufacturing a flexo-plate. The present invention comprises also a flexo-plate comprising a elastomeric floor and an image relief layer (4001), preferably an elastomeric floor, mesa relief layer (4401) and an image relief layer (4001), wherein the layers are obtained by the present embodiments of the flexo-platemaker and obtained by the present embodiments of the method of manufacturing a flexo-plate, also called a flexographic print master.

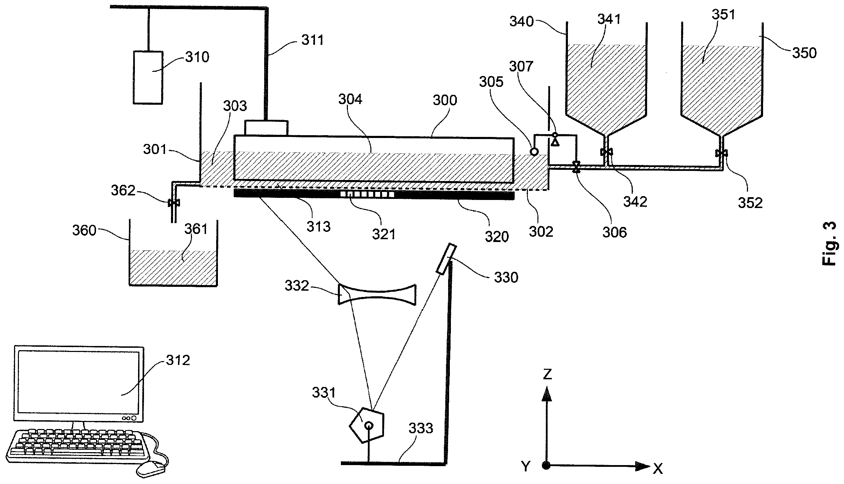

In the present invention the first illumination system and second illumination system is part of an illumination system wherein the first and illumination system are than illumination subsystems comprised in the illumination system. The first subsystem is made transparent or translucent or partly transparent and the exposure from the second illumination subsystem goes through the first illumination subsystem which is made transparent or translucent or partly transparent (FIG. 3). The exposure of the layers goes further through the transparent bottom (302) and the manufacturing platform (300) whereby both illumination subsystems are positioned underneath the transparent bottom. But preferably the exposure by the second illumination subsystem goes also through the first illumination subsystem. This makes that the flexo-platemaker is compact and small-sized. The possibility to make the first illumination subsystem partly transparent or translucent by controlling one or more addressable pixels of the matrix comprised in the first illumination subsystem, a layer may exposed by the second illumination subsystem through the partly transparent or translucent first illumination subsystem and it may be exposed partly exposed by the first illumination subsystem for example there were the first illumination subsystem is not transparent. A faster curing of the layer and/or other layer can be achieved. The advantage is that addressable pixels of the matrix may be controlled to be transparent so the first illumination subsystem may image-wise controlling the exposing of the second illumination subsystem.

To have a high resolution by the illumination system or illumination subsystem the present invention comprising such system or subsystem wherein a two-photon polymerization is applied. Such a system or subsystem is called a two-photon polymerizator. Such two-photon polymerizator gives the possibility to generate a relief layer with a high resolution, such as image relief layer (4001) by two photon polymerization. The advantage of two-photon polymerization is the higher resolution that can be achieved because two-photon excited spot from this system is smaller than a single-photon excited spot. So there is no need of working layer-by-layer (= a planar process) to achieve the image relief layer (4001) or the mesa relief layer (4401).

### Brief Description of Drawings

FIG. 1 shows examples of images having different image features.
FIG. 2 shows a rendering of a relief print master for printing images having different image features.
FIG. 3 shows a preferred embodiment of a flexo-platemaker according to the current invention.
FIG. 4 shows a cross section in the X-Z plane of a relief print master that is constructed by stacking layers on top of each other.

### Description of the embodiments

A manufacturing platform (300) resides in a vat (301) with a transparent bottom (302). The vat (301) is filled with a photocurable liquid (341 or 351). The level (304) of the photocurable liquid (341 or 351) is kept constant by means of a sensor (305), a valve (306) that connects the vat (501) to a supply tank (507) filled with photocurable liquid and a control system (307) to control the valve in order to keep the level (304) in the vat (301) constant.

The manufacturing platform (300) is connected by means of a lever (310) to a motor (311) and a worm drive that is capable to move the platform upwards or downwards in the direction of the Z-dimension. The motor (311) is controlled by a computing device (312).

Below the transparent bottom (302) of the vat (301) is an illumination system that projects a two-dimensional image on the photocurable liquid layer (313) underneath the manufacturing platform (300).

### The illumination system comprises two illumination systems.

A first subsystem is an illumination system that that has a low resolution. It could be, for example, a self-illuminating transparent display panel (320) such as a transparent OLED panel. In the "off condition" such a panel is substantially transparent. When the panel is driven, the pixels (321) of the panel will image-wise light up and expose the layer (313) of curable liquid between the manufacturing platform (300) and the transparent bottom (302). The driving of the pixels (321) of the panel (320) is preferably under the control of the computer (312) or another computing device.

The low resolution illumination can also be an LCD panel that acts as a matrix of light valves and that is exposed from underneath by an external light source. In a first condition, the light valves are substantially transparent. In a second condition, the transparency of the light valves is image-wise controlled by an LCD driver that is commanded by the computer (312) or another computing device.

The low resolution illumination system can also be a digital micromirror system. In that case a digital micromirror device is illuminated by an external light source and the reflected and modulated beam is projected onto the bottom 302 of the vat (301).

A second subsystem of the illumination system may be a high resolution illumination system. A good example is a laser scanning illumination system. In Fig. 3 a laser (530) beams onto a rotating multifaceted mirror (531). The beam is reflected by the rotating multifaceted mirror and is deflected by a cylindrical projection lens system (532), passes through the transparent display panel through which it exposes the curable liquid layer. The rotation of the multifaceted mirror causes a scanning sweep of the laser beam in the fast scan X dimension onto the layer (513) with curable liquid. A slow scan motion in the Y dimension is obtained by having the laser, the rotating multifaceted mirror and the cylindrical projecting lens system mounted on a carriage (533) that can be moved along the Y dimension. During the scanning motion, the intensity of the laser is modulated by a computing device (512) according to information in the image that is to be projected.

The first illumination system (320) has a first pixel resolution "resolution_1" and the second illumination system has a second pixel resolution " resolution_2" that has a higher value than "resolution_1 ".

The apparatus in Fig. 3 comprises two or more tanks of curable liquid. A first tank (340) contains a first curable liquid (341) that is dispensed to the vat (301) through an electronically controlled valve (342). A second tank (350) contains a second curable liquid (551) that is dispensed to the vat (301) through an electronically controlled valve (352). The composition of the curable liquids (341) and (351) is different.

The vat is also connected to a drainpipe for draining the curable liquid (341 or 351) in the tank (301) in to a waste tank (360). Draining is controlled by means of a valve (362).

The electronically controlled valves (342, 352 and 362) are driven by a computing device such as for example the computer (312).

### Three-dimensional modelling of the flexographic print master

FIG. 1 shows a two-dimensional image in the X-Y dimensions of which a relief print master is to be created. It comprises a halftone part (100) for rendering a picture, a geometrical shape (101) and a text part (102). FIG. 2 shows a rendering of the relief print master in which the halftone part (200), the geometrical shape part (201) and the text part (202) are raised in the Z dimension.

Fig. 4 shows a three-dimensional model of an exemplary flexographic print master according to a preferred embodiment of the current invention. The print master consists of a set of stacked layers (400) on top of each other that together define the shape of the flexographic print master. As the figure shows, the bottom layers (402), which comprises the elastomeric floor, are thicker in the Z dimension than the top layers (401). Moreover, the bottom layers 402 are represented with a coarser resolution in the X and Y dimensions.

According to a preferred embodiment of the current invention, the physical characteristics, such as elasticity, plasticity, specific weight, hardness etc... of the layers 402 and 401 are preferably different.

### Calculation of the three-dimensional model

A preliminary step in a method according to the current invention comprises preferably the conversion of a binary two-dimensional source image into a three-dimensional model of the relief print plate that is to be created. Such a three-dimensional representation consists of "voxels" the value of which indicate where during the physical reconstruction of the relief print master material is preserved and where not.

The patent EP 1437882 B1 assigned to Agfa Graphics NV and having a priority date of 2002-12-11, discloses a first method to obtain such a representation. It makes use of a topographic operator to convert the binary two-dimensional source image representing the image features including, text, graphics and images into a three-dimensional image of a flexographic print master that is suitable for physical reconstruction.

The original method uses the following steps:
- providing a two-dimensional binary source image comprising a plurality of image pixels;
- generating a filtered image by replacing every image pixel from the binary source file by a pixel profile spread out over neighbouring image pixels, the pixel profile corresponding to pixel heights;
- taking an envelope of the pixel profiles spread from neighbouring image pixels for defining a three-dimensional print structure which is to be formed by three-dimensional printing;

- slicing the envelope to form image layers for printing in the three-dimensional printing system to thereby generate definitions of a plurality of image layers from the filtered image for printing using the three-dimensional printing system;
- whereby any cross-section through a solid section of a three-dimensional structure at a second level in the three-dimensional print structure which is closer to the substrate than a first level has an area which is equal to or larger than the area of the cross-section of the three-dimensional structure at the first level.

According to a preferred embodiment of the current invention, the "slicing step" is adapted so that it discriminates between lower layers (402) and upper layers (401). The lower layers (402) are sliced with a lower resolution in the Z-dimension and result in layers having a value for their thickness distance_1. The upper layers (401) are sliced with a higher resolution in the Z-dimension result in layers having a value for their thickness distance_2 that is smaller than distance_1.

Additionally the resolution of the pixels in the X-Y planes of the layers (401, 402) can be changed. For example, the lower image layers (402) can be resampled so that the resolution in the X-Y dimensions has a value resolution_1, and the upper image layers (401) can be resampled so that the resolution in the X-Y dimensions has a value resolution_2 that is higher than resolution_1. The value resolution_1 preferably corresponds with the resolution of the first illumination system (320) and the value resolution_2 with the resolution of the second illumination system (330, 331, 332, 333).

The patent EP 2199065 B assigned to Agfa Graphics NV and having a priority date of 2008-12-19 discloses an alternative technique for the same purpose. It equally starts from the binary two-dimensional source image that corresponds to the top layer of the flexographic print master and next uses an approximate circular spread function for calculating subsequently lower layers. The same adaptation is made to this method to accommodate for the different resolutions of the upper and lower layer stacks in the X, Y and Z dimensions.

In both techniques, the result is an ordered stack of binary two-dimensional images that together define a three-dimensional representation of the print master that is suitable for physical reconstruction by a three-dimensional printer. During the physical reconstruction of the relief print master, each one of the ordered stack of two-dimensional layers will be converted into a layer of cured photocurable liquid. When these layers (400) are stacked (FIG. 4) in the same order as the two-dimensional images in the three-dimensional model, they together constitute the relief print master.

### Operation of the flexo-platemaker

According to a preferred embodiment, the operation of the flexo-platemaker in FIG. 3 for making a flexographic print master is as follows.

The manufacturing process is subdivided into two stages: one stage for exposing a curable liquid with a first illumination system (320) at a first resolution having a value resolution_1, and a second stage for exposing a curable liquid with a second illumination system at a second resolution having a value resolution_2 that is higher than the value of the first resolution.

In the initial condition the valves (342, 352) and (362) are closed and the vat is (301) is empty. The manufacturing platform is at its lowest position leaving a space (313) between the platform and the transparent bottom of the vat (301).

In a first step, the valve (342) is opened under control of a computer (312), and the curable liquid (341) flows into the vat (301). The level of the first curable liquid is controlled by the sensor (305), the control system (307) and the valve (306).

When the level of the curable liquid (341) has reached an equilibrium level (304), a first exposure takes place of the lowest binary two-dimensional image that is part of the stack (402) of binary two-dimensional images. This exposure is preferably made by the first illumination system (320). For that purpose, pixels of the first illumination system (320) are image-wise controlled by a computing device, for example the computer (312). The image-wise exposure causes curing of the corresponding locations in the intermediate layer (313). The time of the exposure has to be sufficiently long to obtain the desired degree of curing of the intermediate layer (313). When the intermediate layer (313) is locally sufficiently cured, the worm drive (311) is rotated by the motor (310) under control of a computing device (312) to move up the working platform (300) in the Z-dimension over a distance having a value "distance_1". The result of the above steps is that a first solidified layer of the three-dimensional object that is to be created, adheres to the manufacturing platform.

Moving upward the manufacturing platform (300), causes the level of the first curable liquid (341) to drop. This drop is compensated by the opening the valve (306) under control of the sensor (305) and the control system (307) until the equilibrium level (304) of the first curable liquid (304) is reached again.

At that point a second exposure takes place by the first illumination system (320) of the next binary two-dimensional image that is part of the stack (402) of binary two-dimensional images. The exposure selectively cures locations of the intermediate layer (313) of the curable liquid, thereby creating a second solidified layer of the three-dimensional object that is to be created. The exposure is followed by moving up the manufacturing platform upwards over a distance "distance_1 ", much like in the previous step. The result is that a second solidified layer of the three-dimensional object that is to be created adheres to the manufacturing platform underneath the previously created solidified layer.

The above steps are repeated a number of times until all layers of the stack (402) have been exposed and physically reconstructed.

Because the first illumination system (320) exposes all the pixels of a layer of the simultaneously, the process allows for an efficient and rapid physical reconstruction of the three-dimensional flexographic print master.

As mentioned earlier in this document, the resolution of the self-illuminating transparent display panel can be relatively low. This means that it is sufficient to define the lower layers of the three-dimensional flexographic print master, but not for the upper layers since these carry fine image detail such as halftone dots, text and edges of graphic objects.

In order to physically reconstruct the stack (401) carrying the fine image detail, the following steps are made in a second stage of the manufacturing process.

In a next step an exposure takes place with a second illumination system (330, 331, 332, 333).

To enable this effect, the first illumination system (320) has to be switched off or made transparent. If the first illumination system is a transparent self-illuminating OLED panel, all that is needed is to switch off all the pixels. If it is an LCD panel, the pixels have to be brought in a transparent condition and the external illumination needs to be switched off or removed. If it is a digital micromirror device, the external light source needs to be switched off or shielded.

Next a series of exposures takes place with the second illumination system of image layers in the stack (401). According to a preferred embodiment, a laser (330) beam scans at a resolution having a value resolution_2 by means of deflection system in the X dimension (331) and the movement of the carriage (333) in the Y dimension the intermediate layer (313) of curable liquid. The intensity of the laser (330) beam is modulated in response to the pixel values in a binary two-dimensional image that is part of the stack of binary two-dimensional images (401). The scanning laser (330) beam selectively solidifies the curable liquid (351) in response to the pixel values of the image layer

After this exposure step, the manufacturing platform is raised in the vertical Z-dimension over a second distance having a value "distance_2". The value of the second distance "distance_2" is smaller than the value of the first distance "distance_1" to reflect that the resolution in the Z-dimension of the image layers in stack (401) is higher than the resolution of the image layers in stack (402).

A second exposure takes place of a second image layer in the stack (401) and the above steps are repeated until all the image layers of the stack (401) have been exposed.

At that point the physical reconstruction of the three-dimensional print master is finished. The valve (342) is closed and the curable liquid (341) in the vat 301 can be purged into the waste tank (360) by opening the valve (362).

The finished print master can be removed from the manufacturing plateau and is ready for use on a flexographic printing press or can receive an additional post-fabrication curing step to increase the conversion degree of the object.

### Additional embodiments

According to a preferred embodiment, a method in the current invention uses not just one, but two or more types of curable liquid. Such an approach enables to target different physical properties of the different layers (401, 402) that make up the flexographic print master such as flexibility, resilience, hardness, adhesion to the substrate and ink transfer during printing. By using curable liquids with different sensitizing dyes, it is possible to accommodate for the case that the two illumination systems used to expose the photocurable liquid emit radiation with a different electromagnetic spectrum.

A system according to such an embodiment comprises at least one additional tank (351) that contains a second curable liquid (351) that is different from the first curable liquid (341) in the first tank (340).

The operation is as follows:
After in first step the curable liquid (341) in the vat (340) has been used to expose a first set of layers (402) of the flexographic print master, the valve (342) is closed under control of a computing device (312) and the valve (362) is opened. As a result, the curable liquid (341) pours through a drainpipe into the waste tank (360), after which the valve (362) is closed. An alternative solution that the first curable liquid (341) is recycled through the valve (362) into the first tank (340).

A following step involves filling the vat (301) with the second curable liquid (351) that is stored in a tank (350). This is achieved by opening the valve (352) under control of a computing device (312). The sensor (305), the control system (307) and the valve (306) ensure that the filling of the tank (301) until a reference level (304) is reached.

After the vat (301) has been filled with the second curable liquid (351) from the tank (350), the exposure of a second set of layers (401) van commence.

Optionally the second curable liquid (341) is purged back through the valve (362) into the waste tank (360) or alternatively recycled into second tank (350).

It is not necessary in this embodiment that the layers (402) and (401) have to be exposed by the different illumination systems. For example, both curable liquids (341) and (351) can be either exposed by the first illumination system (320), the second illumination system (330, 331, 332, 333) or a combination of both.

### Composition and characteristics of curable liquids

The curable liquid is preferably a curable resin compositions for flexo-plate creation. The curable liquid comprise at least one polymerizable compound and at least one initiator. Optionally, other compounds such as polymers, fillers, inhibitors, plasticizers, and colorants can be present.

### Polymerizable compounds

The curable resin composition comprises one or more polymerizable compounds. These polymerizable compounds may comprise one or more polymerizable groups, preferably radically polymerizable groups.

Any polymerizable mono- or oligofunctional monomer or oligomer commonly known in the art may be employed. The polymerizable component is an compound which causes a polymerization reaction and crosslinking reaction by being irradiated with light energy in the presence of an initiating system. Suitable materials include epoxy compounds, oxetane compounds, oxorane compounds, cyclic acetal compounds, vinyl compounds, ethylenically unsaturated compounds, vinyl ether compounds, thiirane compounds, cyclic lactone compounds, thiethane compounds, cyclic ether compounds, cyclic thioether compounds, and the like.

Preferred radically polymerizable compounds suitable for use are described are described in the patent EP 1 637 322 B1 (having a priority date of 2004-09-16 and being assigned to Agfa Graphics NV) paragraph [0054] to [0057] and paragraphs [0059] to [0064], the patent EP 1 936 438 B1 (having a priority date of 2006-12-20 and being assigned to Agfa Graphics NV) paragraph [0024] and the patent US 8 980 971 B2 (having a priority date of 2007-03-20 and being assigned to Dsm Ip Assets BV) paragraph "component D".

Examples of the monomers suitably used are acrylamide, (meth)acryloylmorpholine, isobornyl(meth)acrylamide, isobornyl(meth)acrylate, 2-ethylhexyl(meth)acrylate, lauryl(meth)acrylate, tetrahydrofurfuryl(meth)acrylate, vinylcaprolactam, N-vinylpyrrolidone, phenoxyethyl(meth)acrylate, polyethylene glycol mono(meth)acrylate, polyethylene glycol di(meth)acrylate, polypropylene glycol mono(meth)acrylate, polypropylene glycol di(meth)acrylate, triethylene glycol di(meth)acrylate, 1,6-hexanediol di(meth)acrylate, pentaerythritol tri(meth)acrylate, pentaerythritol tetra(meth)acrylate, neopentyl glycol di(meth)acrylate, polyester di(meth)acrylate, urethane di(meth)acrylate, epoxy di(meth)acrylate, (meth)acrylate of phenol novolac polyglycidyl ether, (meth)(acryloxymethyl)isocyanurate, (meth)(acryloxymethyl)hydroxymethisocyanurate derivatives of these compounds and the like.

Commercially available products include SR344, a polyethyleneglycol (400) diacrylate; SR604, a polypropylene monoacrylate; SR9003, a popoxylated neopentyl glycol diacrylate; SR610, a polyethyleneglycol (600) diacrylate; SR531, a cyclic trimethylolpropane formal acrylate; SR340, a 2-phenoxyethyl methacrylate; 2-phenoxyethylacrylate; tetrahydrofurfuryl acrylate; all from SARTOMER; caprolactone acrylate and Genomer 1122, a monofunctional urethane acrylate from RAHN; Bisomer PEA6, a polyethyleneglycol monoacrylate from COGNIS; Ebecryl 1039, an urethane monoacrylate from CYTEC and CN137, an aromatic acrylate oligomer from CRAYNOR, and the like.

Preferred cationically polymerizable compounds suitable for use are described in US 8 980 971 (having a priority date of 2007-03-20 and being assigned to Dsm Ip Assets BV) paragraph "component B".

Examples of the monomers suitably used are bisphenol A diglycidyl ether, bisphenol F diglycidyl ether, epoxy novolac resin, trimethylene oxide, epoxidated soybean oil, butyl epoxystearate, epoxidated polybutadiene, tetrahydrofurfuran, trioxane, 1,3-dioxolane, vinyl cyclohexane, isobutylene, polybutadiene, derivatives of these compounds and the like.

Commercially available products include UVR-6100, UVR-6105, UVR-6110 from Union Carbide Corp, Celoxide 2021, Celoxide 2083, Glycidole, OAEX 24, Cyclomer M100, Epolead GT-301, from Daicel Chemical Industries Ltd., Vectomer 2010, 2020,4010 from Allied Signal, and the like.

### Elastomers

To further optimize the properties of the flexographic printing forme precursor the curable composition may further comprise one or more elastomeric compounds. Suitable elastomeric compounds include copolymers of butadiene and styrene, copolymers of isoprene and styrene, styrene-diene-styrene triblock copolymers, polybutadiene, polyisoprene, nitrile elastomers, polyisobutylene and other butyl elastomers, polyalkyleneoxides, polyphosphazenes, elastomeric polyurethanes and polyesters, elastomeric polymers and copolymers of (meth)acrylates, elastomeric polymers and copolymers of olefins, elastomeric copolymers of vinylacetate and its partially hydrogenated derivatives.

### Initiators

The curable resin compositions according to the present disclosure may comprise one or more initiator(s). The initiator typically initiates the polymerization reaction. The initiator(s) are preferably photoinitiator(s) but can also include thermal initiator(s). Curing may be realized by more than one type of radiation with different wavelength.

Examples of thermal initiators suitable for use in a curable resin composition include tert-amyl peroxybenzoate, 4,4-azobis(4-cyanovaleric acid), 1,1'-azobis(cyclohexanecarbonitrile), 2,2'-azobisisobutyronitrile (AIBN), benzoyl peroxide, 2,2-bis(tert-butylperoxy)butane, 1,1-bis(tert-butylperoxy)cyclohexane, 1,1-Bis(tert-butylperoxy) cyclohexane, 2,5-bis( tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy) 3,3,5trimethylcyclohexane, tert-butyl hydroperoxide, tert-butyl peracetate, tert-butyl peroxide, tert-butyl peroxy benzoate, tert-butylperoxy isopropyl carbonate, cumene hydro peroxide, cyclohexanone peroxide, dicumyl peroxide, lauroyl peroxide, 2,4-pentanedione peroxide, peracetic acid and potassium persulfate.

A photoinitiator produces initiating species, preferably free radicals, upon absorption of actinic radiation. A photoinitiator system may also be used. In said photoinitiator system, a photoinitiator becomes activated upon absorption of actinic radiation and forms free radicals by hydrogen or electron abstraction from a second compound. Said second compound, usually called the co-initiator, becomes then the initiating free radical. Free radicals are high-energy species inducing polymerization of monomers or oligomers. When polyfunctional monomers and oligomers are present in the curable resin composition, said free radicals can also induce crosslinking.

Examples of suitable photoinitiators are disclosed in e.g. J.V. Crivello et al. in "Photoinitiators for Free Radical, Cationic & Anionic Photopolymerisation 2nd edition", Volume III of the Wiley/_SITA Series In Surface Coatings Technology, edited by G. Bradley and published in 1998 by John Wiley and Sons Ltd London, pages 276 to 294.

Specific examples of photoinitiators may include, but are not limited to, the following compounds or combinations thereof: quinones, benzophenone and substituted benzophenones, hydroxy alkyl phenyl acetophenones, dialkoxy acetophenones, a-halogeno-acetophenones, aryl ketones such as 1-hydroxycyclohexyl phenyl ketone, 2-hydroxy-2-methyl-1-phenyl propan-1-one, 2-benzyl-2- dimethylamino-(4-morpholinophenyl)butan-1-one, thioxanthones such as isopropylthioxanthone, benzil dimethylketal, bis(2,6-dimethyl benzoyl)-2,4,4-trimethylpentylphosphine oxide, trimethylbenzoyl phosphine oxide derivatives such as 2,4,6 trimethylbenzoyl diphenylphosphine oxide, methyl thio phenyl morpholine ketones such as 2-methyl-1-[4-(methylthio)phenyl]-2-morpholinopropan-1-one, morpholino phenyl amino ketones,2,2-dimethoxy-1,2-diphenylethan-1-one, 5,7-diiodo-3-butoxy-6-fluorone, diphenyliodonium fluoride and triphenylsulfonium hexafluophosphate, benzoin ethers, peroxides, biimidazoles, aminoketones, benzoyl oxime esters, camphorquinones, ketocoumarins and Michler's ketone.

Suitable commercial photoinitiators include Irgacure 127, Irgacure 184, Irgacure 500, Irgacure 907, Irgacure 369, Irgacure 1700, Irgacure 651, Irgacure 819, Irgacure 1000, Irgacure 1300, Irgacure 1800, Irgacure 1870, Darocur 1173, Darocur 2959, Darocur 4265 and Darocur ITX available from CIBA SPECIALTY CHEMICALS, Lucerin TPO available from BASF AG, Esacure KK, Esacure KT046, Esacure KT055, Esacure KIP150, Esacure KT37 and Esacure EDB available from LAMBERTI, H-Nu 470 and H-Nu 470X available from SPECTRA GROUP Ltd., Genocure EHA andGenocure EPD from RAHN.

Suitable cationic photoinitiators include compounds, which form aprotic acids or Bronstead acids upon exposure sufficient to initiate polymerization. The photoinitiator used may be a single compound, a mixture of two or more active compounds, or a combination of two or more different compounds, i.e. co-initiators. Non-limiting examples of suitable cationic photoinitiators are aryldiazonium salts, diaryliodonium salts, triarylsulphonium salts, triarylselenonium salts and the like.

Sensitizing agents may also be used in combination with the initiators described above. In general, sensitizing agents absorb radiation at a wavelength different then the photoinitiator and are capable of transferring the absorbed energy to that initiator, resulting in the formation of e.g. free radicals.

Preferably, the initiator mixture or initiator system of a first curable liquid is capable of absorbing and transferring energy at a wavelength range according to the first illumination system of the present invention and a second curable liquid is capable of absorbing and transferring energy at a wavelength corresponding to the second illumination system of the present invention.

The amount of initiators in the curable resin composition of the present invention is preferably from 1 to 20 % by weight, more preferably from 4 to 10 % by weight, relative to the total weight of the curable resin composition.

### Inhibitors

In order to prevent premature polymerization, the curable resin composition may contain a polymerization inhibitor. Suitable polymerization inhibitors include phenol type antioxidants, hindered amine light stabilizers, phosphor type antioxidants, hydroquinone monomethyl ether, hydroquinone, t-butyl-catechol or pyrogallol. Suitable commercial inhibitors are, for example, Sumilizer GA-80, Sumilizer GM and Sumilizer GS produed by Sumimoto Chemical Co. Ltd.; Genorad 16, Genorad 18 and Genorad 20 from Rahn; Irgastab UV10 and Irgastab UV22, Tinuvin 460 and CGS20 from Ciba Specialty Chemicals; Floorstab UV range (UV-1, UV-2 UV-5 and UV-8) from Kromachem Ltd, Additol S range (S 100, S120, S130) from Cytec Surface Specialties. The amount is preferably lower than 2 % by weight relative to the total weight of the curable resin composition.

The type and amount of monomers and/or oligomers and optionally the elastomeric compounds are selected to realize optimal properties of the printing form precursor such as flexibility, resilience, hardness, adhesion to the substrate and ink transfer during printing.

The hardness of a flexographic printing forme precursor is typically expressed as Shore A Hardness. The Shore A hardness of a flexographic printing forme according to the present invention is typically between 30 and 75. According to present invention the Shore A hardness of a second curable liquid can be significantly different from the Shore A hardness of a first curable liquid. This could, for instance, improve image resolution during ink transfer.

### Plasticizers

Plasticizers are typically used to improve the plasticity or to reduce the hardness of the flexographic printing form precursor. Plasticizers are liquid or solid, generally inert organic substances of low vapor pressure. Suitable plasticizers include modified and unmodified natural oils and resins, alkyl, alkenyl, arylalkyl or arylalkenyl esters of acids, such as alkanoic acids, arylcarboxylic acids or phosphoric acid; synthetic oligomers or resins such as oligostyrene, oligomeric styrene-butadiene copolymers, oligomeric a-methylstyrene-p-methylstyrene copolymers, liquid oligobutadienes, or liquid oligomeric acrylonitrile-butadiene copolymers; and also polyterpenes, polyacrylates,

polyesters or polyurethanes, polyethylene, ethylene-propylene-diene rubbers, a-methyloligo (methylene oxide), aliphatic hydrocarbon oils, e.g., naphthenic and paraffinic oils; liquid polydienes and liquid polyisoprene.

Examples of particularly suitable plasticizers are paraffinic mineral oils; esters of dicarboxylic acids, such as dioctyl adipate or dioctyl terephthalate; naphthenic plasticizers or polybutadienes having a molar weight of between 500 and 5000 g/mol, Hordaflex LC50 available from HOECHST, Santicizer 278 available from MONSANTO, TMPME available from PERSTORP AB, and Plasthall 4141 available from C. P. Hall Co.

### Colorants

Colorants, dyes and/or pigments, may also be added to the curable composition to enable a visual inspection of the image on the flexographic printing form.

### Example

List of ingredients:
KRATON D1163NS a SIS thermoplastic elastomer from SHELL
SR339C a 2-phenoxyethyl acrylate monomer from SARTOMER
SR351 a trimethylolpropane triacrylate from SARTOMER
SR531 a cyclic trimethylolpropane formal acrylate from SARTOMER
SR9035 an ethoxylated trimethylolpropane triacrylate from SARTOMER
OMNIMER ACMO a acryloyl morpholine from IGM RESINS
CD278 2-(2-butoxyethoxy)ethyl acrylate from SARTOMER
Ebecryl 1360 a polysiloxane hexa-acrylate from ALLNEX
Genomer 1122 a monofunctional urethane acrylate from RAHN AG
BYK UV 3510 a polyether modified polydimethylsiloxane from BYK
VERBATIM HR50 a liquid photopolymer from CHEMENCE
BHT = 2,6-di-t-butyl-4-methylphenol, an inhibitor from ALDRICH
Lucerin TPO-L a photo-initiator from BASF
IRGACURE 127 a photo-initiator from CIBA-GEIGY
IRGACURE 819 a photo-initiator from CIBA-GEIGY

The following example illustrates the change in hardness that can be observed when altering the curable liquid compositions.

Curable resin compositions were prepared by mixing the ingredients as listed in TABLE 1 until complete dissolution:

**TABLE 1**

| Component | | Composition (g) | | |
|---|---|---|---|---|
| | COMP-1 | COMP-2 | COMP-3 | COMP-4 |
| Omnimer ACMO | 5,59 | 5,59 | 5,59 | |
| SR339C | 31,74 | 31,74 | 31,74 | |
| SR531 | 7,95 | 7,95 | 7,95 | |
| CD278 | 1,49 | 1,49 | 1,49 | |
| SR9035 | 2,75 | 2,75 | 2,75 | |
| Byk UV3510 | 0,24 | 0,24 | 0,24 | |
| Irgacure 819 | 2,11 | 2,11 | 2,11 | |
| TP0-L | 2,11 | 2,11 | 2,11 | |
| Irgacure 127 | | | | 3 |
| BHT | | | | 0,04 |
| Verbatim HR50 | | | | 60 |
| Ebecrvl 1360 | 3,28 | | 3,28 | |
| SR351 | 2,69 | | | |
| Genormer 1122 | | 5,97 | | |
| Kraton D1163NS | | | 2,69 | |

### Shore A hardness measurement sample preparation

A low wall height crystal-grade polystyrene petri dish is filled with 5 g of curable liquid (Biosciences Labware - catalog n° 351006 - 50 mm x 9 mm bottom dish with tight-fit top (3,27 mm internal wall height). The sample is placed in a quartz box filled with nitrogen gas before curing.

UV-A curing was carried out from the backside in a UV-A light box equipped with 8 Philips TL 20W/10 UVA (Amax = 370 nm) lamps for 10 minutes followed by curing for 10 minutes from the front side with the same exposing device. The distance between the lamps and the sample was approximately 10 cm.

The Shore A hardness was measured according to ASTM D-2240-05 with an Elcometer 3120 Shore Durometer, employing a sharp indentor point with a load of 12.5 N. The scale readings range from 0 (0.1" penetration) to 100 (zero penetration). Shore A scale is used for soft rubbery materials. Commercial flexo-plates have a Shore A hardness between 30 and 80 Shore A. The shore A hardness obtained with the cured compositions are shown in Table 2.

### Flexibility measurement sample preparation

A silicon spacer (3 mm thickness) was stuck to a polyester support in a rectangular shape of 3 x 4 cm. Next, the formed reservoir was filled with the liquid curable formulations from Table 1. Excess liquid was removed by a clean cut metal blade. The coated layer was covered by a polyester/Silicone protective layer of 23 µm and introduced in a quartz glass box filled with nitrogen. UV-A curing was carried according to previous description

The flexibility level of the samples was determined by bending the samples 180° and given a rating number from 0 to 3 (0 meaning no bending, 3 meaning very flexible). The flexibility level obtained with the cured compositions are shown in Table 2.

**TABLE 2**

| **Sample** | **Shore A** | **Flexibility** |
|---|---|---|
| COMP-1 | 74 | 1 |
| COMP-2 | 63 | 2 |
| COMP-3 | 64 | 2 |
| COMP-4 | 48 | 3 |

### Industrial Applicability

The above system and method from the present invention, including the preferred embodiments, are for creating a flexographic print master.

## Claims

1. A flexo-plate manufacturing method comprising the steps of:
- filling a vat (301) having a transparent bottom (302) with a first curable liquid (341) that is stored in a first tank (340) by opening a valve (342), the first curable liquid having a first set of physical characteristics after curing;
- moving a manufacturing platform (300) vertically over a first distance to create a first layer (313) of the first curable liquid (341) between the manufacturing platform (300) and the transparent bottom (302) of the vat (301);
- exposing from underneath the vat (301) said first layer(313) for curing said layer (313);
- purging the curable liquid (341) in the vat (301) through a valve (362) to either a waste tank (360) or to the first tank (340);
- filling the vat (301) with a second curable liquid (351) that is stored in a second tank (350) by opening a valve (352), the second curable liquid having a second set of physical characteristics after curing that is different than the first set of physical characteristics;
- moving the manufacturing platform (300) vertically over a second distance to create a second layer (313) of the second curable liquid (351) between the manufacturing platform (300) and the transparent bottom (302) of the vat (301);
- exposing from underneath the vat (301) said second layer (313) for curing said second layer (313);
and wherein the elasticity of the first curable liquid (341) after curing is higher than the elasticity of the second curable liquid (351) after curing.

2. A flexo-plate manufacturing method according to claim 1, wherein the hardness of the first curable liquid (341) after curing is lower than the hardness of the second curable liquid (351) after curing.

3. A flexo-plate manufacturing method according to anyone of the claims **1** to **2** wherein:
- exposing said first or second layer (313) is made by a first illumination subsystem (320) that comprises a matrix of addressable pixels and that belongs to the group of: a transparent OLED illumination system, an LCD illumination system or a digital micromirror illumination system and exposing said first or second layer(313) is made by a second illumination subsystem that comprises a scanning light beam or a two-photon polymerizator.

4. A flexo-plate manufacturing method according to any one of the claims **1** to **3** wherein the first and second curable liquid comprises one or more radically polymerizable groups selected from the group comprising acrylamide, (meth)acryloylmorpholine, isobornyl(meth)acrylamide, isobornyl(meth)acrylate, 2-ethylhexyl(meth)acrylate, lauryl(meth)acrylate, tetrahydrofurfuryl(meth)acrylate, vinylcaprolactam, N-vinylpyrrolidone, phenoxyethyl(meth)acrylate, polyethylene glycol mono(meth)acrylate, polyethylene glycol di(meth)acrylate, polypropylene glycol mono(meth)acrylate, polypropylene glycol di(meth)acrylate, triethylene glycol di(meth)acrylate, 1,6-hexanediol di(meth)acrylate, pentaerythritol tri(meth)acrylate, pentaerythritol tetra(meth)acrylate, neopentyl glycol di(meth)acrylate, polyester di(meth)acrylate, urethane di(meth)acrylate, epoxy di(meth)acrylate, (meth)acrylate of phenol novolac polyglycidyl ether, (meth)(acryloxymethyl)isocyanurate and (meth)(acryloxymethyl)hydroxymethisocyanurate derivatives and wherein the curable liquid comprises one or more elastomeric compounds selected from the group comprising copolymers of butadiene and styrene, copolymers of isoprene and styrene, styrene-diene-styrene triblock copolymers, polybutadiene, polyisoprene, nitrile elastomers, polyisobutylene and other butyl elastomers, polyalkyleneoxides, polyphosphazenes, elastomeric polyurethanes and polyesters, elastomeric polymers and copolymers of (meth)acrylates, elastomeric polymers and copolymers of olefins, elastomeric copolymers of vinylacetate and its partially hydrogenated derivatives.

5. Use of a flexo-plate, manufactured by a method according to anyone of the claims 1 to 4, in a flexographic printing press for printing on flexible packaging.

6. A flexo-plate manufacturing method according to any one of the claims 1 to 2 wherein the exposing underneath the vat of the first and/or second curable liquid is performed by an illumination system (320) comprising a scanning light beam.

7. A flexo-plate manufacturing method according to any one of the claims 1 to 2 wherein the exposing underneath the vat of the first and/or second curable liquid is performed by an illumination system (320) comprising a two-photon polymerization.

8. A flexo-plate manufacturing method according to claim 3 wherein the resolution of the second illumination subsystem is higher than the resolution of the first illumination sub-system.

9. A flexo-plate manufacturing method according to claim 8 wherein the second layer is exposed by the second illumination subsystem through the first illumination subsystem; which has a controller to make addressable pixels from the matrix transparent.

10. A flexo-plate manufacturing method according to any one of the claims 1-4 or 6-9 wherein the first layer is a elastomeric floor or mesa relief layer; and the second layer is a mesa relief layer or an image relief layer.

## Patentansprüche

1. Ein Verfahren zur Herstellung einer flexografischen Druckvorlage, das die folgenden Schritte umfasst:
- Füllen eines Behälters (301) mit einem transparenten Boden (302) mit einer in einem ersten Tank (340) gespeicherten, ersten härtenden Flüssigkeit (341), indem ein Ventil (342) geöffnet wird, wobei die erste härtende Flüssigkeit nach Härtung einen ersten Satz physikalischer Eigenschaften hat,
- vertikales Bewegen einer Herstellungsplattform (300) über einen ersten Abstand, um zwischen der Herstellungsplattform (300) und dem transparenten Boden (302) des Behälters (301) eine erste Schicht (313) der ersten härtenden Flüssigkeit (341) zu erzeugen,
- Belichten, ab der Unterseite des Behälters (301), der ersten Schicht (313), um die Schicht (313) zu härten,
- Abführen der im Behälter (301) enthaltenen härtenden Flüssigkeit (341) durch ein Ventil (362) in einen Abfallbehälter (360) oder in den ersten Tank (340),
- Füllen des Behälters (301) mit einer zweiten, in einem zweiten Tank (350) gespeicherten härtenden Flüssigkeit (351), indem ein Ventil (352) geöffnet wird, wobei die zweite härtende Flüssigkeit nach Härtung einen zweiten Satz physikalischer Eigenschaften hat, der sich vom ersten Satz physikalischer Eigenschaften unterscheidet,
- vertikales Bewegen der Herstellungsplattform (300) über einen zweiten Abstand, um zwischen der Herstellungsplattform (300) und dem transparenten Boden (302) des Behälters (301) eine zweite Schicht (313) der zweiten härtenden Flüssigkeit (351) zu erzeugen,
- Belichten, ab der Unterseite des Behälters (301), der zweiten Schicht (313), um die zweite Schicht (313) zu härten,
und wobei die Elastizität der ersten härtenden Flüssigkeit (341) nach Härtung höher ist als die Elastizität der zweiten härtenden Flüssigkeit (351) nach Härtung.

2. Ein Verfahren zur Herstellung einer flexografischen Druckvorlage nach Anspruch 1, wobei die Härte der ersten härtenden Flüssigkeit (341) nach Härtung niedriger ist als die Härte der zweiten härtenden Flüssigkeit (351) nach Härtung.

3. Ein Verfahren zur Herstellung einer flexografischen Druckvorlage nach einem der Ansprüche 1 oder 2, wobei:
- die Belichtung der ersten oder zweiten Schicht (313) mittels eines ersten Beleuchtungssubsystems (320), das eine Matrix adressierbarer Pixel umfasst und zur Gruppe eines transparenten OLED-Beleuchtungssystems, eines LCD-Beleuchtungssystems oder eines digitalen Mikrospiegel-Beleuchtungssystems gehört, erfolgt und die Belichtung der ersten oder zweiten Schicht (313) mittels eines zweiten Beleuchtungssubsystems, das einen Abtastlichtstrahl oder einen Zwei-Photonen-Polymerisator umfasst, erfolgt.

4. Ein Verfahren zur Herstellung einer flexografischen Druckvorlage nach einem der Ansprüche 1 bis 3, wobei die erste und zweite härtende Flüssigkeit ein oder mehrere radikalisch polymerisierbare Gruppen umfasst, ausgewählt aus der Gruppe, die Acrylamid, (Meth)acryloylmorpholin, Isobornyl(meth)acrylamid, Isobornyl(meth)acrylat, 2-Ethylhexyl(meth)acrylat, Lauryl(meth)acrylat, Tetrahydrofurfuryl(meth)acrylat, Vinylcaprolactam, N-Vinylpyrrolidon, Phenoxyethyl(meth)acrylat, Polyethylenglycolmono(meth)acrylat, Polyethylenglycoldi(meth)acrylat, Polypropylenglycolmono(meth)acrylat,
Polypropylenglycoldi (meth)acrylat, Triethylenglycoldi(meth)acrylat, 1,6-Hexandioldi(meth)acrylat, Pentaerythrittri(meth)acrylat, Pentaerythrittetra(meth)acrylat, Neopentylglycoldi(meth)acrylat, Polyesterdi(meth)acrylat, Urethandi(meth)acrylat, Epoxydi(meth)acrylat, (Meth)acrylat von Phenolnovolakpolyglycidylether,
(Meth)(acryloxymethyl)isocyanurat,
(Meth)(acryloxymethyl)hydroxymethisocyanurat und Derivate der obigen Verbindungen umfasst, und wobei die härtende Flüssigkeit eine oder mehrere elastomere Verbindungen umfasst, ausgewählt aus der Gruppe, die Copolymere von Butadien und Styrol, Copolymere von Isopren und Styrol, Styrol-Dien-Styrol-Triblockcopolymere, Polybutadien, Polyisopren, Nitrilelastomere, Polyisobutylen und andere Butylelastomere, Polyalkylenoxide, Polyphosphazene, elastomere Polyurethane und Polyester, elastomere Polymere und Copolymere von (Meth)acrylaten, elastomere Polymere und Copolymere von Olefinen, elastomere Copolymere von Vinylacetat und deren teilweise hydrierte Derivate umfasst.

5. Verwendung einer durch ein Verfahren nach einem der Ansprüche 1 bis 4 hergestellten flexografischen Druckvorlage in einer Flexodruckpresse zum Bedrucken flexibler Verpackungen.

6. Ein Verfahren zur Herstellung einer flexografischen Druckvorlage nach einem der Ansprüche 1 bis 2, wobei die Belichtung, ab der Unterseite des Behälters, der ersten und/oder zweiten härtenden Flüssigkeit mittels eines einen Abtastlichtstrahl umfassenden Beleuchtungssystems (320) erfolgt.

7. Ein Verfahren zur Herstellung einer flexografischen Druckvorlage nach einem der Ansprüche 1 bis 2, wobei die Belichtung, ab der Unterseite des Behälters, der ersten und/oder zweiten härtenden Flüssigkeit mittels eines einen Zwei-Photonen-Polymerisator umfassenden Beleuchtungssystems (320) erfolgt.

8. Ein Verfahren zur Herstellung einer flexografischen Druckvorlage nach Anspruch 3, wobei die Auflösung des zweiten Beleuchtungssubsystems höher ist als die Auflösung des ersten Beleuchtungssubsystems.

9. Ein Verfahren zur Herstellung einer flexografischen Druckvorlage nach Anspruch 8, wobei die zweite Schicht durch das erste Beleuchtungssubsystem, umfassend ein Steuergerät, das adressierbare Pixel der Matrix transparent macht, mittels des zweiten Beleuchtungssubsystems belichtet wird.

10. Ein Verfahren zur Herstellung einer flexografischen Druckvorlage nach einem der Ansprüche 1-4 oder 6-9, wobei die erste Schicht ein elastomerer Boden oder eine Mesareliefschicht ist und die zweite Schicht eine Mesareliefschicht oder eine Bildreliefschicht ist.

## Revendications

1. Procédé de fabrication d'un modèle d'impression flexographique comprenant les étapes consistant à:
- remplir une cuve (301) pourvue d'un fond transparent (302) d'un premier liquide durcissable (341) stocké dans un premier réservoir (340) en ouvrant une valve (342), ledit premier liquide durcissable présentant un premier ensemble de propriétés physiques après le durcissement,
- déplacer verticalement une plate-forme de fabrication (300) sur une première distance afin de créer une première couche (313) du premier liquide durcissable (341) entre la plate-forme de fabrication (300) et le fond transparent (302) de la cuve (301),
- exposer, à partir du côté inférieur de la cuve (301), ladite première couche (313) afin de durcir la couche (313),
- purger le liquide durcissable (341) contenu dans la cuve (301) à travers une valve (362) dans une cuve à déchets (360) ou dans le premier réservoir (340),
- remplir la cuve (301) d'un deuxième liquide durcissable (351) stocké dans un deuxième réservoir (350) en ouvrant une valve (352), ledit deuxième liquide durcissable présentant un deuxième ensemble de propriétés physiques après le durcissement qui diffère du premier ensemble de propriétés physiques,
- déplacer verticalement la plate-forme de fabrication (300) sur une deuxième distance afin de créer une deuxième couche (313) du deuxième liquide durcissable (351) entre la plate-forme de fabrication (300) et le fond transparent (302) de la cuve (301),
- exposer, à partir du côté inférieur de la cuve (301), ladite deuxième couche (313) afin de durcir la deuxième couche (313), l'élasticité du premier liquide durcissable (341) après le durcissement étant supérieure à l'élasticité du deuxième liquide durcissable (351) après le durcissement.

2. Procédé de fabrication d'un modèle d'impression flexographique selon la revendication 1, **caractérisé en ce que** la dureté du premier liquide durcissable (341) après le durcissement est inférieure à la dureté du deuxième liquide durcissable (351) après le durcissement.

3. Procédé de fabrication d'un modèle d'impression flexographique selon l'une quelconque des revendications 1 ou 2, **caractérisé en ce que**:
- l'exposition de la première ou deuxième couche (313) s'effectue à l'aide d'un premier sous-système d'illumination (320) comprenant une matrice de pixels adressables et appartenant au groupe composé d'un système d'illumination OLED transparent, d'un système d'illumination LCD ou d'un système d'illumination numérique à micromiroirs et que l'exposition de la première ou deuxième couche (313) s'effectue à l'aide d'un deuxième sous-système d'illumination comprenant un faisceau de lumière de balayage ou un polymérisateur à deux photons.

4. Procédé de fabrication d'un modèle d'impression flexographique selon l'une quelconque des revendications 1 à 3, **caractérisé en ce que** le premier et le deuxième liquide durcissable comprend un ou plusieurs groupes polymérisables par radicaux libres choisis parmi le groupe comprenant de l'acrylamide, de la morpholine de (méth)acryloyle, de la (méth)acrylamide d'isobornyle, du (méth)acrylate d'isobornyle, du (méth)acrylate de 2-éthylhexyle, du (méth)acrylate de lauryle, du (méth)acrylate de tétrahydrofurfuryle, du vinylcaprolactame, de la N-vinylpyrrolidone, du (méth)acrylate de phénoxyéthyle, du mono(méth)acrylate de polyéthylène glycol, du di(méth)acrylate de polyéthylène glycol, du mono(méth)acrylate de polypropylène glycol, du di(méth)acrylate de polypropylène glycol, du di(méth)acrylate de triethylène glycol, du di(méth)acrylate de 1,6-hexanediol, du tri(méth)acrylate de pentaérythritol, du tétra(méth)acrylate de pentaérythritol, du di(méth)acrylate de néopentylglycol, du di(méth)acrylate de polyester, du di(méth)acrylate d'uréthane, du di(méth)acrylate époxy, du (méth)acrylate d'éther de polyglycidyle de novolaque phénolique, de l'isocyanurate de (méth)(acryloxyméthyle), de l'hydroxyméthisocyanurate de (méth)(acryloxyméthyle) et des dérivés de ces composés et que le liquide durcissable comprend un ou plusieurs composés élastomères choisis parmi le groupe comprenant des copolymères de butadiène et de styrène, des copolymères d'isoprène et de styrène, des copolymères à trois blocs de styrène-diène-styrène, du polybutadiène, du polyisoprène, des élastomères de nitrile, du polyisobutylène et d'autres élastomères de butyle, des oxydes de polyalkylène, des polyphosphazènes, des polyuréthanes élastomères et des polyesters, des polymères et copolymères élastomères de (méth)acrylates, des polymères et copolymères élastomères d'oléfines, des copolymères élastomères d'acétate de vinyle et leurs dérivés partiellement hydrogénés.

5. Utilisation d'un modèle d'impression flexographique fabriqué par un procédé selon l'une quelconque des revendications 1 à 4 dans une presse d'impression flexographique servant à imprimer des emballages flexibles.

6. Procédé de fabrication d'un modèle d'impression flexographique selon l'une quelconque des revendications 1 à 2, **caractérisé en ce que** l'exposition, à partir du côté inférieur de la cuve, du premier et/ou du deuxième liquide durcissable s'effectue à l'aide d'un système d'illumination (320) comprenant un faisceau de lumière de balayage.

7. Procédé de fabrication d'un modèle d'impression flexographique selon l'une quelconque des revendications 1 à 2, **caractérisé en ce que** l'exposition, à partir du côté inférieur de la cuve, du premier et/ou du deuxième liquide durcissable s'effectue à l'aide d'un système d'illumination (320) comprenant un polymérisateur à deux photons.

8. Procédé de fabrication d'un modèle d'impression flexographique selon la revendication 3, **caractérisé en ce que** la résolution du deuxième sous-système d'illumination est supérieure à la résolution du premier sous-système d'illumination.

9. Procédé de fabrication d'un modèle d'impression flexographique selon la revendication 8, **caractérisé en ce que** la deuxième couche est exposée à l'aide du deuxième sous-système d'illumination à travers du premier sous-système d'illumination comprenant un dispositif de contrôle rendant transparentes les pixels adressables de la matrice.

10. Procédé de fabrication d'un modèle d'impression flexographique selon l'une quelconque des revendications 1-4 ou 6-9, **caractérisé en ce que** la première couche est un fond élastomère ou une couche de relief mesa et que la deuxième couche est une couche de relief mesa ou une couche de relief d'image.
